# EUROPEAN PATENT SPECIFICATION

(11) **EP 4 372 135 B1**
(45) Date of publication and mention of the grant of the patent: **15.10.2025**
(21) Application number: 22208241.4
(22) Date of filing: 18.11.2022
(51) Int. Cl.: D03D 47/27, F16H 21/54

(54) **FORK-ELEMENT FOR A GRIPPER DRIVE SYSTEM FOR A WEAVING MACHINE**
GABELELEMENT FÜR EIN GREIFERANTRIEBSSYSTEM EINER WEBMASCHINE
ÉLÉMENT DE FOURCHE POUR UN SYSTÈME D'ENTRAÎNEMENT DE PINCE POUR UN MÉTIER À TISSER

(43) Date of publication of application: 22.05.2024
(73) Proprietor: Picanol, 8900 Ieper (BE)
(72) Inventor: Strubbe, Patrick, 8470 Gistel (BE)
(74) Representative: Patentanwälte Ruff, Wilhelm, Beier, Dauster & Partner mbB

(56) References cited:
- EP-A1- 4 008 817
- CN-A- 111 850 779
- CN-Y- 201 082 911
- US-A- 4 784 005

## Description

### TECHNICAL FIELD AND PRIOR ART

The invention relates to a fork-element for a gripper drive system for a weaving machine, to a fork-element system, and to a gripper drive system comprising a fork-element and/or a fork-element system.

A gripper drive system comprising a fork-element is shown for example in EP 4 008 817 A1. The gripper drive system drives a rapier drive wheel to oscillate back-and-forth upon rotation of a drive shaft of the weaving machine. The gripper drive system comprises a disk rotating with the drive shaft of the weaving machine, a crank connected to the disk, the fork-element rotatably mounted on the crank, a cross-element rotatably mounted on the fork-element, and a gear segment fixedly connected to the cross-element, wherein the cross-element with the gear segment upon rotation of the disk is driven to oscillate back-and-forth about a gear segment axis.

CN201082911Y shows a fork-element with the features of the preamble of claim 1.

### SUMMARY OF THE INVENTION

It is an object of the invention to provide a light-weight fork-element for a gripper drive system without decreasing a strength of the fork-element. Further objects of the invention are to provide a fork-element system comprising such a fork-element and a gripper drive system with a fork-element and/or a fork-element system.

These objects are solved by the fork-element, the fork-element system, and the gripper drive system with the features of claims 1, 10 and 15. Preferred embodiments are defined in the dependent claims.

According to a first aspect, a fork-element for a gripper drive system for a weaving machine comprising a first bearing seat, a second bearing seat, and a main body with a coupling element configured for coupling the fork-element to a crank of the gripper drive system is provided, wherein the second bearing seat is positioned closer to the coupling element than the first bearing seat, and wherein the first bearing seat is formed integrally with the main body and the second bearing seat is formed separately and can be fastened to the main body using fixation elements.

Throughout this specification and the following claims, the expressions "first" and "second" are only used to distinguish one element from another element and not to indicate any order of the elements.

In a typical use, the fork-element may be arranged such that the first bearing seat is below the second bearing seat, therefore the first bearing seat may also be referred to as lower bearing seat and the second bearing seat may also be referred to as upper bearing seat.

The coupling element in embodiments is a coupling pin, which in use is rotatably arranged in a bushing of the crank of the gripper drive system. In other embodiments, the coupling element is a bushing, which rotatably receives a pin of the crank of the gripper drive system.

As the second bearing seat formed separately is positioned closer to the coupling element, the fixation elements used to fasten the second bearing seat to the main body can be arranged closer to a centerline of the coupling element about which the fork-element is moved than prior art fixation elements fastening the first bearing seat to the main body. Therefore, additional mass balancing elements provided at prior art fork-elements can be reduced or avoided, and an overall weight of the fork-element can be reduced.

In an embodiment, the fixation elements are chosen so that the second bearing seat cannot be dismantled from the main body.

In other embodiments, the fixation elements are bolts, wherein the main body and the second bearing seat are each provided with holes for receiving the bolts. In an embodiment, the holes in the second bearing seat are through holes and the holes in the main body are threaded holes, wherein the bolts are inserted via the through holes in the second bearing seat and threaded into the threaded holes in the main body. In other embodiment, the holes in the main body are through holes and the holes in the second bearing seat are threaded holes, wherein the bolts are inserted via the through holes in the main body and threaded into the threaded holes in the second bearing seat.

In an embodiment, the holes in the main body and in the second bearing seat extend in a direction perpendicular to a tangent to a bearing ring circle of the second bearing seat at a point of the bearing ring circle closest to the coupling element.

The fork-element is adapted to rotatably support a cross-element in the first bearing seat and the second bearing seat. In addition, it is known to mount the cross-element to the fork-element such that it is non-displaceable in axial direction supported in the first bearing seat further away from the coupling element, which - in use - typically is the lower bearing seat. The expression "non-displaceable in axial direction supported" is used to describe a structural support, which ideally prevents a movement in the axial direction, wherein marginal relative movements due to clearances, resilience and others in embodiments are tolerable. Due to the axial support of the cross-element, the first bearing seat is subjected to forces in the axial direction. On the other hand, in case the cross-element is only radially supported in the second bearing seat, the second bearing seat is not subjected to forces in the axial direction. Hence, no cross-forces or shearforces are acting on bolts arranged perpendicular to a direction of a bearing axis defined by the first bearing seat and the second bearing seat. Therefore, a size and/or a number of bolts can be reduced compared to prior art devices.

In an embodiment, the second bearing seat can be fastened to the main body using four bolts.

In an embodiment, the second bearing seat is fastened to the main body with loose manufacturing tolerances in the direction of the bearing axis defined by the second bearing seat and the first bearing seat. In case the cross-element is only radially supported in the second bearing seat, an arrangement of the second bearing seat in the direction of the bearing axis with respect to the main body is acceptable with loose manufacturing tolerances.

In an embodiment, the main body is a hollow element. This allows for a light-weight design of the fork-element having sufficient strength. In an embodiment, walls of the hollow main body have recesses for a further weight reduction.

In an embodiment, a centerline of the coupling element is inclined with respect to a bearing axis defined by the second bearing seat and the first bearing seat, wherein an inclination angle is less than 90°.

In an embodiment, the centerline of the coupling element intersects the bearing axis defined by the second bearing seat and the first bearing seat at an intersection point, wherein the intersection point is closer to the first bearing seat than to the second bearing seat.

In an embodiment, a center of gravity of the fork-element and all elements fixed non-displaceable in position to the fork-element, i.e. all elements moving the same way as the fork-element such as bearing rings fixed to the bearing seats, lies on the centerline of the coupling element. This allows to avoid imbalance forces when driving the fork-element.

According to a second aspect, a fork-element system comprising the fork-element with the main body, the first bearing seat and the separate second bearing seat fastened to the main body and comprising a cross-element is provided, wherein the cross-element is rotatably supported in the second bearing seat of the fork-element and in the first bearing seat of the fork-element, and wherein the cross-element is non-displaceable in axial direction supported in the first bearing seat formed integrally with the main body.

As the cross-element is only rotatably supported in the second bearing seat, the second bearing seat is not subjected to bearing forces in a direction of the bearing axis. Hence, fixing elements used for fastening the second bearing seat to the main body are not subjected to high forces in the direction of the bearing axis. The direction of the bearing axis is also referred to as axial direction of the bearings or any elements thereof.

In an embodiment, a first bearing comprising an inner ring and an outer ring, wherein the inner ring is non-displaceable in axial direction with respect to the outer ring, is provided, which first bearing is arranged between the first bearing seat and the cross-element, wherein the cross-element is non-displaceable in axial direction fixed to the inner ring, in particular via a fixation plate and bolts, and wherein the outer ring is non-displaceable in axial direction fixed in the first bearing seat.

When fixing the cross-element to the inner ring that is precisely positioned with respect to the first bearing seat that is formed integrally with the main body, the cross-element can be precisely positioned with respect to the main body of the fork-element in the axial direction of the bearings, and thus also with respect to the centerline of the coupling element.

In an embodiment, a distance ring is provided between the inner ring of the first bearing and a shoulder of the cross-element. The distance ring allows a compensation of any height differences resulting from an arrangement of the bearing in the bearing seat so that the cross-element is precisely positioned with respect to the main body.

In an embodiment, a first bearing configured to counter axial and radial forces, preferably a tapered bearing, is arranged between the first bearing seat and the cross-element, and a second bearing configured to counter solely radial forces, preferably a cylinder bearing, is arranged between the second bearing seat and the cross-element. The second bearing allows for a rotatable support of the cross-element in the second bearing seat. The first bearing allows for a rotatable and an axial support of the cross-element in the first bearing seat. The first bearing in embodiments is a tapered bearing, in particular a tapered roller bearing.

In embodiments, a gear segment is fixed, in particular bolted, to the cross-element. In use, the gear segment is rotated back-and-forth about a gear segment axis through the intersection point of the bearing axis and the centerline. Due to the precise positioning of the cross-element along the bearing axis, high bearing forces of a shaft of the gear segment can be avoided.

According to a third aspect, a gripper drive system comprising a fork-element and/or a fork-element system is provided.

### BRIEF DESCRIPTION OF THE DRAWINGS

In the following, embodiments of the invention will be described in detail with reference to the drawings. Throughout the drawings, the same elements will be denoted by the same reference numerals. The figures show:
- Fig. 1: shows in a side view a gripper drive system and a rapier drive wheel driven by the gripper drive system;
- Fig. 2: shows in a perspective view the gripper drive system of Fig. 1;
- Fig. 3: shows in a perspective view a fork element of the gripper drive system of Fig. 1;
- Fig. 4: shows in a sectional side view the fork-element of Fig. 3 and bearings arranged in a first bearing seat and a second bearing seat of the fork-element;
- Fig. 5: shows in a sectional top view the fork-element of Fig. 3 and a bearing arranged in the second bearing seat of the fork-element;
- Fig. 6: shows in a sectional side view a fork-element system comprising the fork-element of Fig. 3, a cross-element, and gear segment fixed to the cross-element; and
- Fig. 7: shows in a sectional side view a detail of the first bearing seat of Fig. 6.

### DETAILED DESCRIPTION OF EMBODIMENTS OF THE INVENTION

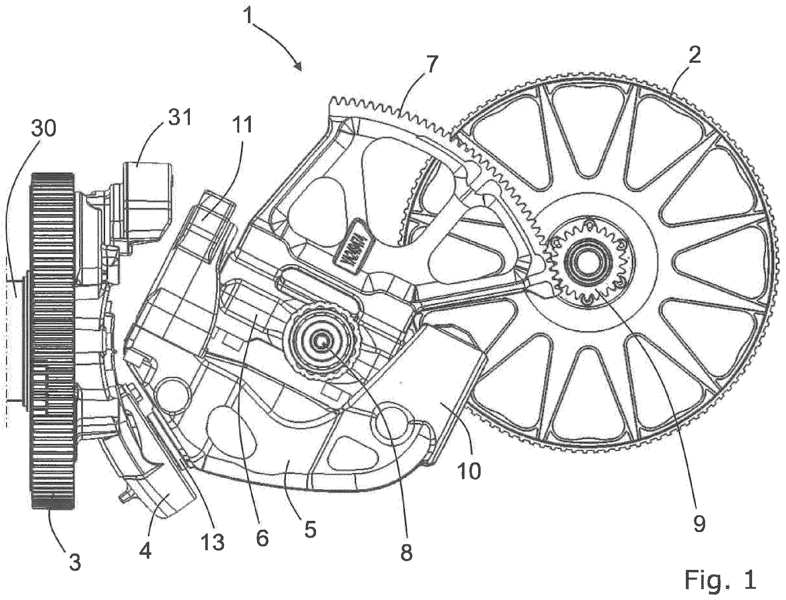

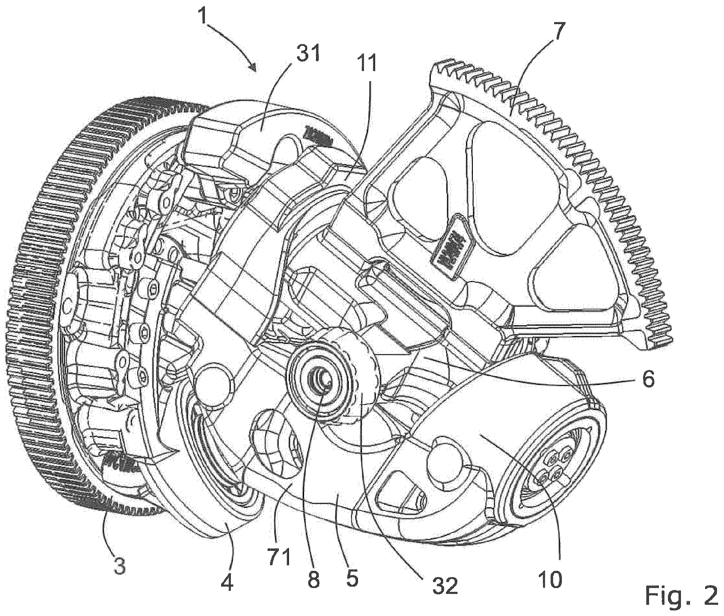

Fig. 1 shows a in a side view a gripper drive system 1 that drives a rapier drive wheel 2 to oscillate back-and-forth upon rotation of a shaft 30 of a weaving machine. Fig. 2 shows in a perspective view the gripper drive system 1 of Fig. 1.

The gripper drive system 1 shown in Figs. 1 and 2 comprises a disk 3 rotating with the shaft 30 of the weaving machine, a crank 4 connected to the disk 3, a fork-element 5 rotatably mounted on the crank 4, a cross-element 6 rotatably mounted on the fork-element 5 and via bearings 32 in a frame (not shown) of the gripper drive system 1, and a gear segment 7 fixedly connected to the cross-element 6. The crank 4 also comprises a counterweight 31. Upon rotation of the disk 3, the gear segment 7 is driven to oscillate back-and-forth about a gear segment axis 8. The gear segment 7 engages a gear 9 connected to the rapier drive wheel 2.

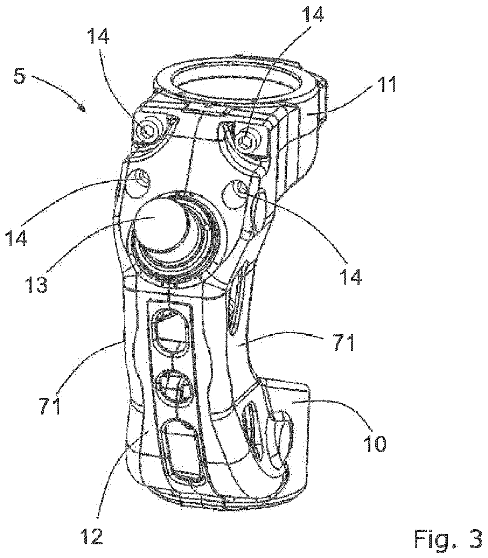

Fig. 3 shows in a perspective view the fork-element 5 of the gripper drive system 1 of Fig. 1, which fork-element 5 has a first bearing seat 10, a second bearing seat 11, and a main body 12.

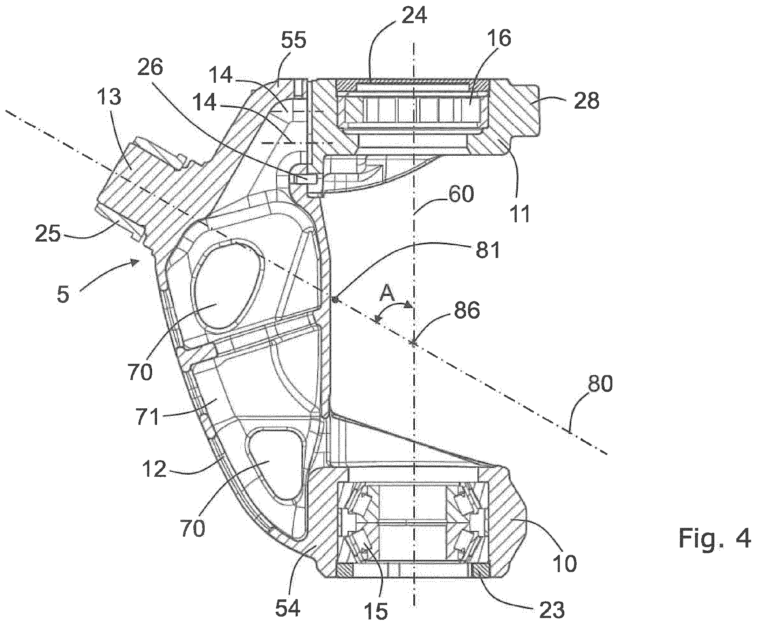

Fig. 4 shows in a sectional side view of the fork element 5 together with a first bearing 15 arranged in the first bearing seat 10 and a second bearing 16 arranged in the second bearing seat 11. The main body 12 of the fork-element 5 has a coupling element 13 configured for coupling the fork-element 5 to the crank 4 of the gripper drive system 1 (see Fig. 1). In use, the fork-element 5 is moved about a centerline 80 of the coupling element 13. In the embodiment shown, the coupling element 13 is a coupling pin. However, alternative coupling elements 13 are known to the person skilled in the art.

In the embodiment shown, the main body 12 is a hollow element, wherein walls 71 of the main body 12 have recesses 70 for a further weight reduction. A size and position of the recesses 70 can be chosen by the person skilled in the art to obtain a main body 12 having a low weight and a sufficient rigidity.

The first bearing 15 and the second bearing 16 are aligned and define a bearing axis 60. The centerline 80 is inclined with respect to the bearing axis 60 by an inclination angle A (see Fig. 4). The centerline 80 intersects the bearing axis 60 at an intersection point 86, wherein the intersection point 86 is closer to the first bearing seat 10 than to the second bearing seat 11.

The fork-element 5 has a first arm 54 comprising the first bearing seat 10 and a second arm 55 comprising the second bearing seat 11, wherein the first arm 54 is larger than the second arm 55. The second bearing seat 11 is positioned closer to the coupling element 13 than the first bearing seat 10. In the embodiment shown, in use the second bearing seat 11 is arranged above the first bearing seat 10. However, the invention is not limited to this design. The first bearing seat 10 is formed integrally with the main body 12. The second bearing seat 11 is formed separately and fastened to the main body 12 using fixation elements 14.

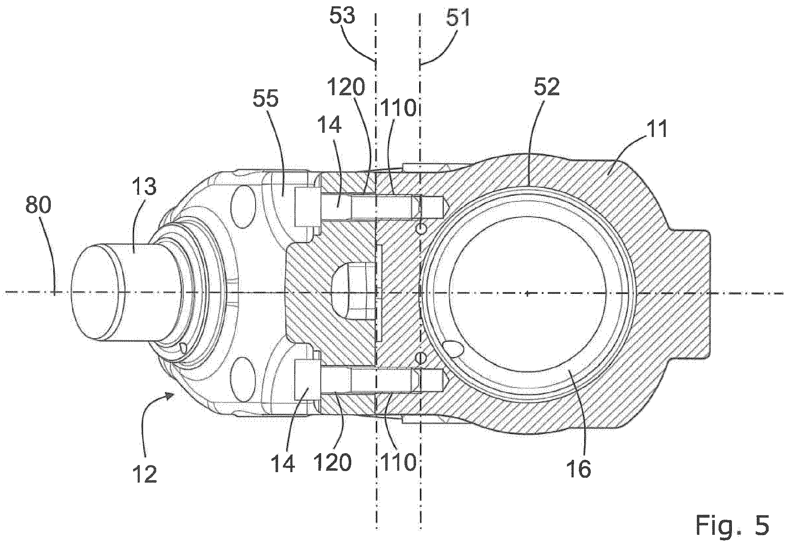

As best seen in Figs. 3, the fixation elements 14 are bolts, for example four bolts arranged at corners of a square. As best seen in Fig. 5, where only two bolts are shown, for receiving the bolts, the main body 12 is provided with holes 120 and the second bearing seat 11 is provided with holes 110. In the embodiment shown, the main body 12 is provided with holes 120 in the form of through holes and the second bearing seat 11 is provided with holes 110 in the form of threaded holes, wherein the bolts are inserted via the holes 120 in the main body 12 and screwed into the holes 110 in the second bearing seat 11 for fastening the second bearing seat 11 to the main body 12.

As shown in Fig. 4 the second bearing 16 is fixed to the second bearing seat 11 by a threaded fixation ring 24. Further a bearing 25 can be provided on the coupling element 13. As shown in Fig. 4 also a setting pin 26 can be provided to position the second bearing seat 11 with respect to the main body 12 before the fixation elements 14 are fastened.

As shown in Fig. 4, the center of gravity 81 of the fork-element 5 and all elements mounted non-displaceable in position to the fork-element 5 lies on the centerline 80 of the coupling element 13; wherein the fork element 5 comprises the main body 12 with the first bearing seat 10, the second bearing seat 11, the fixation elements 14, the threaded fixation rings 23 and 24, and elements mounted non-displaceable in position to the fork-element 5, thus, moving in the same way as the fork element 5, such as parts of the bearings 15 and 16. To this end the second bearing seat 11 can also be provided with a small protrusion 28, for example a protrusion made integrally with the second bearing seat 11.

As shown in Fig. 5, the holes 120 in the main body 12 and the holes 110 in the second bearing seat 11 each extend in a direction perpendicular to a tangent 51 to a bearing ring circle 52 of the second bearing seat 11 at a point of the bearing ring circle 52 closest to the coupling element 13.

As best seen in Fig. 5, the bolts are arranged in parallel to the centerline 80. Further, as the second arm 55 is smaller in size than the first arm 54, the mass of the second arm 55 including the fixation elements 14 can be chosen to match the mass of the first arm 54. Therefore, additional mass balancing elements at the first arm 54 should not be provided, and an overall weight of the fork-element 5 can be reduced.

As further shown in Fig. 4, the first bearing 15 arranged in the first bearing seat 10 is configured to counter axial and radial forces. In the embodiment shown, the first bearing 15 is a tapered bearing. The second bearing 16 arranged in the second bearing seat 11 is configured to counter solely radial forces. In the embodiment shown, the second bearing 16 is a cylinder bearing.

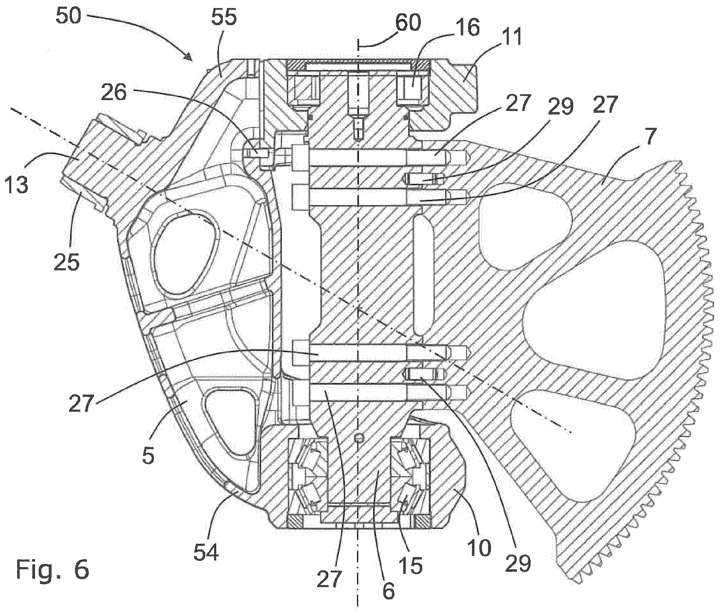

Fig. 6 shows in a sectional side view a fork-element system 50 comprising the fork-element 5 and the cross-element 6 with the gear segment 7. The cross-element 6 is supported via the first bearing 15 in the first bearing seat 10 and via the second bearing 16 in the second bearing seat 11, and the gear segment 7 fixed to the cross-element 6. The gear segment 7 is mounted to the cross-element 6 using several bolts 27. Setting pins 29 can be provided to position the gear segment 7 with respect to the cross-element 6 before the bolts 27 are fastened.

As best seen in Fig. 6, the first bearing 15 configured to counter axial and radial forces defines an axial position of the cross-element 6, i.e. a position of the cross-element 6 with respect to fork-element 5 along a bearing axis 60 as well as a radial position of the cross-element 6 at the first bearing 15, while the second bearing 16 solely defines the radial position of the cross-element 6 at the second bearing 16 with respect to the bearing axis 60.

Due to the design of the second bearing 16, the second bearing 16 does not counter forces in the axial direction, i.e., in the direction along or in parallel to the bearing axis 60. Therefore, no forces or only small forces are exerted on the second bearing seat 11 in the axial direction defined by the bearing axis 60. Hence, the fixation elements 14 fastening the second bearing seat 11 to the main body 12 are not subjected to high shear forces in the axial direction defined by the bearing axis 60.

Further, as the axial position of the cross-element 6 is determined by means of the first bearing 15 formed integrally with the main body 12, a small relative shifting of the second bearing seat 11 with respect to the cross-element 6 in the axial direction defined by the bearing axis 60 is tolerable. Hence, for fixing the second bearing seat 11 to the main body 12 using the bolts, a limited shifting is tolerable. On the other hand, the second bearing seat 11 and the main body 12 contact each other at an abutment surface 53, where a planar surface of the second bearing seat 11 and a planar surface of the main body 12 are pressed against each other, which abutment surface 53 extends in parallel to the bearing axis 60 and to the tangent 51 (see Fig. 5). The planar surface of the second bearing seat 11 and the planar surface of the main body 12 can be machined precisely parallel to the tangent 51 and cross to the tangent 51, so that the abutment surface 53 will be arranged in parallel with the bearing axis 60. If the fixation elements 14 have play inside the holes 120, the second bearing 16 can be positioned precisely with respect to the tangent 51, so that the bearing axis 60 coincides with the axial direction of the cross-element 6.

As the axial position along the bearing axis 60 of the cross-element 6 is determined by means of the first bearing 15 formed integrally with the main body 12, the axial position of the cross-element 6 can be precisely set with respect to the coupling element 13 of the main body 12.

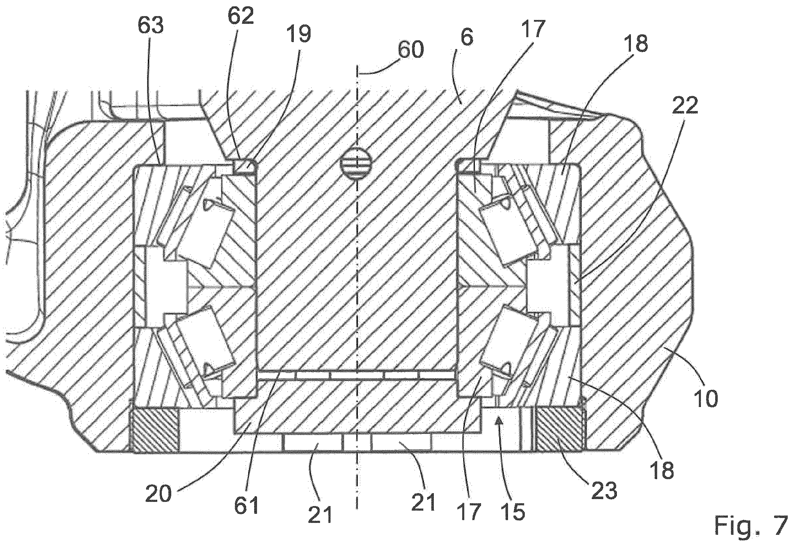

In the embodiment shown, as best seen in Fig. 7, which shows a detail of Fig. 6, the first bearing 15 comprises two inner rings 17 and two outer rings 18, which outer rings 18 are separated by a distance ring 22, wherein the inner rings 17 are non-displaceable in the axial direction supported in the outer rings 18. The outer rings 18 are arranged fixed in position in the first bearing seat 10, and the outer rings 18 are fixed by a threaded fixation ring 23 between a base surface 63 of the first bearing seat 10 and the fixation ring 23. The inner ring 17 is fixed to the cross-element 6 using a fixation plate 20 and bolts 21, so that the cross-element 6 is not displaceable in the axial direction defined by the bearing axis 60 with respect to the inner rings 17, and thus with respect to the outer rings 18, and thus with respect to the main body 12. In the embodiment shown, the fixation plate 20 is circular or ring-shaped, wherein the fixation plate 20 has holes via which the bolts 21 are for example inserted into threaded holes of the cross-element 6. The fixation plate 20 contacts an outer end of the inner ring 17, and by tightening the bolts 21, the fixation plate 20 forces the inner ring 17 towards a side end 61 of the cross-element 6. A distance ring 19 is provided between an inner end of the inner ring 17 of the first bearing 15 and a shoulder 62 of the cross-element 6. A height of the distance ring 19 can be chosen so that the position of the shoulder 62 is arranged in a defined desired axial position with respect to the first bearing seat 10, and in this way the cross-element 6 is arranged in a defined desired axial position with respect to the main body 12.

## Claims

1. A fork-element for a gripper drive system (1) for a weaving machine comprising a first bearing seat (10), a second bearing seat (11), and a main body (12) with a coupling element (13) configured for coupling the fork-element (5) to a crank (4) of the gripper drive system (1), wherein the second bearing seat (11) is positioned closer to the coupling element (13) than the first bearing seat (10), **characterized in that** the first bearing seat (10) is formed integrally with the main body (12) and the second bearing seat (11) is formed separately and can be fastened to the main body (12) using fixation elements (14).

2. The fork-element according to claim 1, **characterized in that** the fixation elements (14) are bolts, wherein the main body (12) and the second bearing seat (11) are each provided with holes (120, 110) for receiving the bolts.

3. The fork-element according to claim 2, **characterized in that** the holes (120, 110) extend in a direction perpendicular to a tangent (51) to a bearing ring circle (52) of the second bearing seat (11) at a point of the bearing ring circle (52) closest to the coupling element (13).

4. The fork-element according to claim 2 or 3, **characterized in that** the second bearing seat (11) can be fastened to the main body (12) using fixation elements (14), in particular four bolts.

5. The fork-element according to any one of claims 1 to 4, **characterized in that** the second bearing seat (11) is fastened to the main body (12) with loose manufacturing tolerances in a direction of a bearing axis (60) defined by the second bearing seat (11) and the first bearing seat (10).

6. The fork-element according to any one of claims 1 to 5, **characterized in that** the main body (12) is a hollow element, wherein in particular walls (71) of the main body (12) have recesses (70) for a weight reduction.

7. The fork-element according to any one of claims 1 to 6, **characterized in that** a centerline (80) of the coupling element (13) is inclined with respect to a bearing axis (60) defined by the second bearing seat (11) and the first bearing seat (10), wherein an inclination angle (A) is less than 90°.

8. The fork-element according to claim 7, **characterized in that** a centerline (80) of the coupling element (13) intersects the bearing axis (60) defined by the second bearing seat (11) and the first bearing seat (10) at an intersection point (86), wherein the intersection point (86) is closer to the first bearing seat (10) than to the second bearing seat (11).

9. The fork-element according to any one of claims 1 to 8, **characterized in that** a center of gravity (81) of the fork-element (5) and all elements fixed non-displaceable in position to the fork-element (5) lies on the centerline (80) of the coupling element (13).

10. A fork-element system comprising the fork-element (5) according to any one of claims 1 to 9 and a cross-element (6), wherein the cross-element (6) is rotatably supported in the second bearing seat (11) of the fork-element (5) and in the first bearing seat (10) of the fork-element (5), **characterized in that** the cross-element (6) is non-displaceable in axial direction supported in the first bearing seat (10) formed integrally with the main body (12).

11. The fork-element system according to claim 10, **characterized in that** a first bearing (15) comprising an inner ring (17) and an outer ring (18), wherein the inner ring (17) is non-displaceable in axial direction with respect to the outer ring (18), which first bearing (15) is arranged between the first bearing seat (10) and the cross-element (6), wherein the cross-element (6) is non-displaceable in axial direction fixed to the inner ring (17), in particular via a fixation plate (20) and bolts (21), and wherein the outer ring (18) is non-displaceable in axial direction fixed to the first bearing seat (10).

12. The fork-element system according to claim 11, **characterized in that** a distance ring (19) is provided between the inner ring (17) of the first bearing (15) and a shoulder (62) of the cross-element (6).

13. The fork-element system according to claim 10, 11 or 12, **characterized in that** a first bearing (15) configured to counter axial and radial forces, preferably a tapered bearing, is arranged between the first bearing seat (10) and the cross-element (6), and wherein a second bearing (16) configured to counter solely radial forces, preferably a cylinder bearing, is arranged between the second bearing seat (11) and the cross-element (6).

14. The fork-element system according to any one of claims 10 to 13, **characterized in that** a gear segment (7) is fixed to the cross-element (6).

15. A gripper drive system for a weaving machine comprising a fork-element (5) according to any one of claims 1 to 9 or a fork-element system (50) according to any one of claims 10 to 14.

## Patentansprüche

1. Ein Gabelelement für ein Greiferantriebssystem (1) für eine Webmaschine umfassend einen ersten Lagersitz (10), einen zweiten Lagersitz (11), und einen Grundkörper (12) mit einem Kupplungselement (13), das zum Koppeln des Gabelelements (5) mit einer Kurbel (4) des Greiferantriebssystems (1) ausgebildet ist, wobei der zweite Lagersitz (11) näher am Kupplungselement (13) positioniert ist als der erste Lagersitz (10), **dadurch gekennzeichnet, dass** der erste Lagersitz (10) integral mit dem Grundkörper (12) ausgebildet ist und der zweite Lagersitz (11) separat ausgebildet ist und unter Verwendung von Befestigungselementen (14) am Grundkörper (12) befestigbar ist.

2. Das Gabelelement nach Anspruch 1, **dadurch gekennzeichnet, dass** die Befestigungselemente (14) Bolzen sind, wobei der Grundkörper (12) und der zweite Lagersitz (11) jeweils mit Löchern (120, 110) zur Aufnahme der Bolzen versehen sind.

3. Das Gabelelement nach Anspruch 2, **dadurch gekennzeichnet, dass** die Löcher (120, 110) in einer Richtung senkrecht zu einer Tangente (51) an einen Lagerringkreis (52) des zweiten Lagersitzes (11) verlaufen an einem Punkt auf dem Lagerringkreis (52), der dem Kupplungselement (13) am nächsten liegt.

4. Das Gabelelement nach Anspruch 2 oder 3, **dadurch gekennzeichnet, dass** der zweite Lagersitz (11) unter Verwendung von Befestigungselementen (14), insbesondere vier Bolzen, am Grundkörper (12) befestigbar ist.

5. Das Gabelelement nach einem der Ansprüche 1 bis 4, **dadurch gekennzeichnet, dass** der zweite Lagersitz (11) mit losen Fertigungstoleranzen am Grundkörper (12) befestigt ist in einer Richtung einer durch den zweiten Lagersitz (11) und den ersten Lagersitz (10) definierten Lagerachse (60).

6. Das Gabelelement nach einem der Ansprüche 1 bis 5, **dadurch gekennzeichnet, dass** der Grundkörper (12) ein Hohlelement ist, wobei insbesondere Wände (71) des Grundkörpers (12) Aussparungen (70) für eine Gewichtsreduzierung aufweisen.

7. Das Gabelelement nach einem der Ansprüche 1 bis 6, **dadurch gekennzeichnet, dass** eine Mittellinie (80) des Kupplungselements (13) gegenüber einer durch den zweiten Lagersitz (11) und den ersten Lagersitz (10) definierten Lagerachse (60) geneigt ist, wobei ein Neigungswinkel (A) kleiner als 90° ist.

8. Das Gabelelement nach Anspruch 7, **dadurch gekennzeichnet, dass** eine Mittellinie (80) des Kupplungselements (13) die durch den zweiten Lagersitz (11) und den ersten Lagersitz (10) definierte Lagerachse (60) an einem Schnittpunkt (86) schneidet, wobei der Schnittpunkt (86) näher am ersten Lagersitz (10) als am zweiten Lagersitz (11) liegt.

9. Das Gabelelement nach einem der Ansprüche 1 bis 8, **dadurch gekennzeichnet, dass** ein Schwerpunkt (81) des Gabelelements (5) und aller am Gabelelement (5) unverschiebbar in Position befestigten Elementen auf der Mittellinie (80) des Kupplungselements (13) liegt.

10. Ein Gabelelementsystem umfassend das Gabelelement (5) nach einem der Ansprüche 1 bis 9 und ein Querelement (6), wobei das Querelement (6) im zweiten Lagersitz (11) des Gabelelements (5) und im ersten Lagersitz (10) des Gabelelements (5) drehbar abgestützt ist, **dadurch gekennzeichnet, dass** das Querelement (6) in axialer Richtung unverschiebbar im integral mit dem Grundkörper (12) ausgebildeten ersten Lagersitz (10) abgestützt ist.

11. Das Gabelelementsystem nach Anspruch 10, **dadurch gekennzeichnet, dass** ein erstes Lager (15) umfassend einen Innenring (17) und einen Aussenring (18), wobei der Innenring (17) in axialer Richtung gegenüber dem Aussenring (18) unverschiebbar ist, welches erste Lager (15) zwischen dem ersten Lagersitz (10) und dem Querelement (6) angeordnet ist, wobei das Querelement (6) in axialer Richtung unverschiebbar am Innenring (17) befestigt ist, insbesondere über eine Befestigungsplatte (20) und Bolzen (21), und wobei der Aussenring (18) in axialer Richtung unverschiebbar am ersten Lagersitz (10) befestigt ist.

12. Das Gabelelementsystem nach Anspruch 11, **dadurch gekennzeichnet, dass** zwischen dem Innenring (17) des ersten Lagers (15) und einem Ansatz (62) des Querelements (6) ein Distanzring (19) vorgesehen ist.

13. Das Gabelelementsystem nach Anspruch 10, 11 oder 12, **dadurch gekennzeichnet, dass** zwischen dem ersten Lagersitz (10) und dem Querelement (6) ein erstes Lager (15) angeordnet ist, das dazu ausgebildet ist, axialen und radialen Kräften entgegenzuwirken, vorzugsweise ein Kegellager, und wobei zwischen dem zweiten Lagersitz (11) und dem Querelement (6) ein zweites Lager (16) angeordnet ist, das dazu ausgebildet ist, ausschliesslich radiale Kräfte entgegenzuwirken, vorzugsweise ein Zylinderlager.

14. Das Gabelelementsystem nach einem der Ansprüche 10 bis 13, **dadurch gekennzeichnet, dass** ein Zahnradsegment (7) am Querelement (6) befestigt ist.

15. Ein Greiferantriebssystem für eine Webmaschine umfassend ein Gabelelement (5) nach einem der Ansprüche 1 bis 9 oder ein Gabelelementsystem (50) nach einem der Ansprüche 10 bis 14.

## Revendications

1. Un élément de fourche pour un système d'entraînement à pinces (1) pour une machine à tisser comprenant un premier siège de palier (10), un deuxième siège de palier (11), et un corps principal (12) avec un élément d'accouplement (13) configuré pour accoupler l'élément de fourche (5) à une manivelle (4) du système d'entraînement à pinces (1), dans lequel le deuxième siège de palier (11) est positionné plus proche de l'élément d'accouplement (13) que le premier siège de palier (10), **caractérisé en ce que** le premier siège de palier (10) est formé intégralement avec le corps principal (12) et le deuxième siège de palier (11) est formé séparément et peut être fixé au corps principal (12) à l'aide d'éléments de fixation (14).

2. L'élément de fourche selon la revendication 1, **caractérisé en ce que** les éléments de fixation (14) sont des boulons, dans lequel le corps principal (12) et le deuxième siège de palier (11) sont prévus chacun de trous (120, 110) pour recevoir les boulons.

3. L'élément de fourche selon la revendication 2, **caractérisé en ce que** les trous (120, 110) s'étendent dans une direction perpendiculaire à une tangente (51) à un cercle de bague de palier (52) du deuxième siège de palier (11) au niveau d'un point du cercle de bague de palier (52) le plus proche de l'élément d'accouplement (13).

4. L'élément de fourche selon la revendication 2 ou 3, **caractérisé en ce que** le deuxième siège de palier (11) peut être fixé au corps principal (12) à l'aide d'éléments de fixation (14), en particulier quatre boulons.

5. L'élément de fourche selon l'une quelconque des revendications 1 à 4, **caractérisé en ce que** le deuxième siège de palier (11) est fixé au corps principal (12) avec des tolérances de fabrication lâches dans une direction d'un axe de palier (60) défini par le deuxième siège de palier (11) et le premier siège de palier (10).

6. L'élément de fourche selon l'une quelconque des revendications 1 à 5, **caractérisé en ce que** le corps principal (12) est un élément creux, dans lequel en particulier des parois (71) du corps principal (12) présentent des évidements (70) pour une réduction de poids.

7. L'élément de fourche selon l'une quelconque des revendications 1 à 6, **caractérisé en ce qu'**une ligne centrale (80) de l'élément d'accouplement (13) est inclinée par rapport à un axe de palier (60) défini par le deuxième siège de palier (11) et le premier siège de palier (10), dans lequel un angle d'inclinaison (A) est inférieur à 90°.

8. L'élément de fourche selon la revendication 7, **caractérisé en ce qu'**une ligne centrale (80) de l'élément d'accouplement (13) coupe l'axe de palier (60) défini par le deuxième siège de palier (11) et le premier siège de palier (10) au niveau d'un point d'intersection (86), dans lequel le point d'intersection (86) est plus proche du premier siège de palier (10) que le deuxième siège de palier (11).

9. L'élément de fourche selon l'une quelconque des revendications 1 à 8, **caractérisé en ce qu'**un centre de gravité (81) de l'élément de fourche (5) et tous les éléments fixés de manière non déplaçable en position à l'élément de fourche (5) se trouve sur la ligne centrale (80) de l'élément d'accouplement (13).

10. Un système d'élément de fourche comprenant l'élément de fourche (5) selon l'une quelconque des revendications 1 à 9 et un élément transversal (6), dans lequel l'élément transversal (6) est supporté rotatif dans le deuxième siège de palier (11) de l'élément de fourche (5) et dans le premier siège de palier (10) de l'élément de fourche (5), **caractérisé en ce que** l'élément transversal (6) est supporté non déplaçable dans la direction axiale dans le premier siège de palier (10) formé intégralement avec le corps principal (12).

11. Le système d'élément de fourche selon la revendication 10, **caractérisé en ce qu'**un premier palier (15) comprenant une bague intérieure (17) et une bague extérieure (18), dans lequel la bague intérieure (17) est non déplaçable dans la direction axiale par rapport à la bague extérieure (18), lequel premier palier (15) est disposé entre le premier siège de palier (10) et l'élément transversal (6), dans lequel l'élément transversal (6) est fixé non déplaçable dans la direction axiale à la bague intérieure (17), en particulier via une plaque de fixation (20) et des boulons (21), et dans lequel la bague extérieure (18) est fixée non déplaçable dans la direction axiale au premier siège de palier (10).

12. Le système d'élément de fourche selon la revendication 11, **caractérisé en ce qu'**une bague de distance (19) est prévue entre la bague intérieure (17) du premier palier (15) et un épaulement (62) de l'élément transversal (6).

13. Le système d'élément de fourche selon la revendication 10, 11 ou 12, **caractérisé en ce qu'**un premier palier (15) configuré pour contrer des forces axiales et radiales, de préférence un palier conique, est disposé entre le premier siège de palier (10) et l'élément transversal (6), et dans lequel un deuxième palier (16) configuré pour contrer uniquement des forces radiales, de préférence un palier cylindrique, est disposé entre le deuxième siège de palier (11) et l'élément transversal (6).

14. Le système d'élément de fourche selon l'une quelconque des revendications 10 à 13, **caractérisé en ce qu'**un segment d'engrenage (7) est fixé à l'élément transversal (6).

15. Un système d'entraînement à pinces pour une machine à tisser comprenant un élément de fourche (5) selon l'une quelconque des revendications 1 à 9 ou un système d'élément de fourche (50) selon l'une quelconque des revendications 10 à 14.
